(19) Europäisches Patentamt / European Patent Office / Office européen des brevets

(11) **EP 1 207 032 B1**

(12) **EUROPEAN PATENT SPECIFICATION**

(45) Date of publication and mention
of the grant of the patent:
**13.08.2008 Bulletin 2008/33**

(51) Int Cl.:
***B29C 45/76*** *(2006.01)*     ***B29C 45/50*** *(2006.01)*

(21) Application number: **01127324.0**

(22) Date of filing: **15.11.2001**

(54) **Method for controlling injection molding machine capable of reducing variations in weight of molded product**

Verfahren zum Steuern einer Spritzgiessmaschine geeignet zum Reduzieren der Gewichtsänderungen von Formkörpern

Procédé pour contrôler une machine à moulage par injection capable à réduire les variations en poids de pièces moulées

(84) Designated Contracting States:
**AT CH DE FR GB IT LI**

(30) Priority: **15.11.2000 JP 2000348194**

(43) Date of publication of application:
**22.05.2002 Bulletin 2002/21**

(73) Proprietor: **SUMITOMO HEAVY INDUSTRIES, LTD.**
**Shinagawa-ku,**
**Tokyo 141-8686 (JP)**

(72) Inventor: **Konno, Takeshi**
**Chiba-shi,**
**Chiba (JP)**

(74) Representative: **Geyer, Ulrich F. et al**
**WAGNER & GEYER,**
**Patentanwälte,**
**Gewürzmühlstrasse 5**
**80538 München (DE)**

(56) References cited:
**EP-A- 1 072 387          EP-A- 1 077 123**

- **PATENT ABSTRACTS OF JAPAN vol. 2000, no. 04, 31 August 2000 (2000-08-31) -& JP 2000 015675 A (TEIJIN LTD), 18 January 2000 (2000-01-18) -& DATABASE WPI Week 200052 Derwent Publications Ltd., London, GB; AN 2000-560258 XP002190374 & JP 2000 015675 A**

- **PATENT ABSTRACTS OF JAPAN vol. 016, no. 550 (E-1292), 19 November 1992 (1992-11-19) -& JP 04 207989 A (FANUC LTD), 29 July 1992 (1992-07-29) -& DATABASE WPI Week 199237 Derwent Publications Ltd., London, GB; AN 1992-303407 XP002190375 & JP 04 207989 A**

- **PATENT ABSTRACTS OF JAPAN vol. 013, no. 055 (M-795), 8 February 1989 (1989-02-08) -& JP 63 262219 A (MOTOMARO AOKI), 28 October 1988 (1988-10-28) -& DATABASE WPI Week 198849 Derwent Publications Ltd., London, GB; AN 1988-350334 XP002190376 & JP 63 262219 A**

- **PATENT ABSTRACTS OF JAPAN vol. 1998, no. 03, 27 February 1998 (1998-02-27) -& JP 09 286049 A (JAPAN STEEL WORKS LTD:THE), 4 November 1997 (1997-11-04)**

- **PATENT ABSTRACTS OF JAPAN vol. 014, no. 351 (M-1003), 30 July 1990 (1990-07-30) -& JP 02 121819 A (MITSUBISHI HEAVY IND LTD), 9 May 1990 (1990-05-09)**

- **PATENT ABSTRACTS OF JAPAN vol. 016, no. 290 (M-1272), 26 June 1992 (1992-06-26) -& JP 04 077228 A (SUMITOMO HEAVY IND LTD), 11 March 1992 (1992-03-11) -& DATABASE WPI Week 199217 Derwent Publications Ltd., London, GB; AN 1992-136594 XP002190377 & JP 04 077228 A**

- **PATENT ABSTRACTS OF JAPAN vol. 010, no. 311 (M-528), 23 October 1986 (1986-10-23) -& JP 61 121921 A (JAPAN STEEL WORKS LTD:THE), 9 June 1986 (1986-06-09) -& DATABASE WPI Week 198629 Derwent Publications Ltd., London, GB; AN 1986-187680 XP002190378 & JP 61 121921 A**

**Description**

BACKGROUND OF THE INVENTION

1. Field of the Invention

The present invention relates to a method for controlling a motor-driven injection molding machine.

2. Description of the Related Art

An injection molding machine comprises a screw located within a heating cylinder. An injection shaft is directly connected to the rear end portion of the screw. The injection shaft is rotatably supported by a pressure plate through some bearings. The injection shaft is driven in an axial direction by an injection servomotor that is supported on the pressure plate. The pressure plate moves forwards and backwards along guide bars in response to the operation of the injection servomotor through a ball screw.

A molding operation in the injection molding machine will be described, focusing on a motor-driven injection molding machine.

The screw is rotated by a measuring servomotor for screw rotation in a plasticization/measuring process. A resin is fed from a hopper to a rear portion of the screw in the heating cylinder. Rotation of the screw melts and advances the resin and thus a certain measured amount of resin is fed to a nose portion of the heating cylinder. During this time, the screw is driven backwards due to a back pressure of the molten resin trapped in the nose portion of the heating cylinder. The above-mentioned back pressure of the molten resin is detected by using a load cell and is controlled with a feedback control loop, as will be described in more detail below.

Then, in a filling process, the pressure plate is advanced by means of driving the injection servomotor. A nose portion of the screw serves as a piston to fill a cavity of a mold with the molten resin.

The resin within the cavity of the mold is allowed to cool under a predetermined pressure. This process is referred to as a dwelling process or a hold pressure process. In this hold pressure process, the pressure of the resin is controlled in a feedback control loop as in the above-mentioned back pressure control. Hereafter, the filling process and the hold pressure process continued from the filling process will collectively be called an injecting process.

Then, an injection device returns to the plasticization/measuring process after the completion of the hold pressure process. On the other hand, in a clamping device, an eject operation is carried out for ejecting a solid product out of the mold in parallel with the plasticization/measuring process. The eject operation involves the opening of the mold to remove the solid product from the mold by means of an ejector mechanism and then closing the mold for the injecting process.

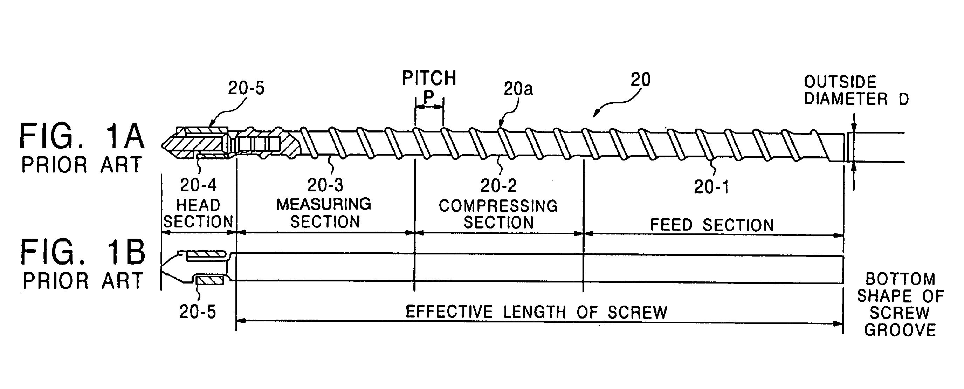

Referring to Figs. 1A and 1B, the screw will be specifically described. In Fig. 1A, a screw 20 comprises a feed section 20-1, a compressing section 20-2, a measuring section 20-3, and a head section 20-4. The feed section 20-1 feeds the resin supplied from a hopper forward in a solid or partly melted state. The resin is heated to close to melting point at the feed section 20-1. Therefore, in general, the diameter of the rod-shaped body of the screw 20 shown in Fig. 1B, which forms a spiral thereon, is substantially constant. The spiral is typically called a flight.

There is a space between particles of the resin fed from the feed section 20-1, and the compressing section 20-2, so that the volume is reduced to approximately a half due to melting of the resin. In order to compensate for the reduced volume, the space through which the resin can pass is reduced. This is achieved by providing a taper on the rod-shaped body which forms the flight at the compressing section 20-2 so that a groove of the flight is shallow. Consequently, the compressing section 20-2 compresses the molten resin, increases the effect of frictional heating, and increases the pressure of the resin, thereby moving water components, volatile gases, or the like, which are contained in the air/resin, back to the hopper. As is evident from the above, the pressure of the resin in the heating cylinder is highest in the compressing section 20-2.

The measuring section 20-3 has the shallowest groove of the flight. In the measuring section 20-3, the resin is subjected to a large shearing force and its temperature is increased to a uniform temperature by self-generating heat due to friction. Also, the measuring section 20-3 feeds a certain measured amount of resin to a nozzle side.

The molten resin is fed from the measuring section 20-3 to the nozzle side via a nonreturn ring 20-5 at the head section 20-4. The nonreturn ring 20-5 is positioned at the left-hand side of Figs. 1A and 1B in the measuring process. In this state, the molten resin can be fed from the measuring section 20-3 to the nozzle side. After completion of the measuring process, the nonreturn ring 20-5 is moved to the right-hand side of the drawings because of pressure difference. As a result, the return of the resin from the nozzle side to the measuring section 20-3 is stopped. In general, the head section 20-4 is constructed in such a manner that a screw thread is cut at the base thereof and is screwed into an end portion of the rod-shaped body of the screw. Therefore, the diameter of the base portion of the head section 20-4 is smaller than that of the rod-shaped body of the screw.

Meanwhile, there may be cases where the screw is driven backward in the molding cycle, for the following reasons:

A: Moving the screw backwards for the purpose of depressurizing after completion of the injecting process.
B: Measuring the resin.
C: Moving the screw backwards after measuring process.

Conventionally, the screw is not rotated in the case of A and C.

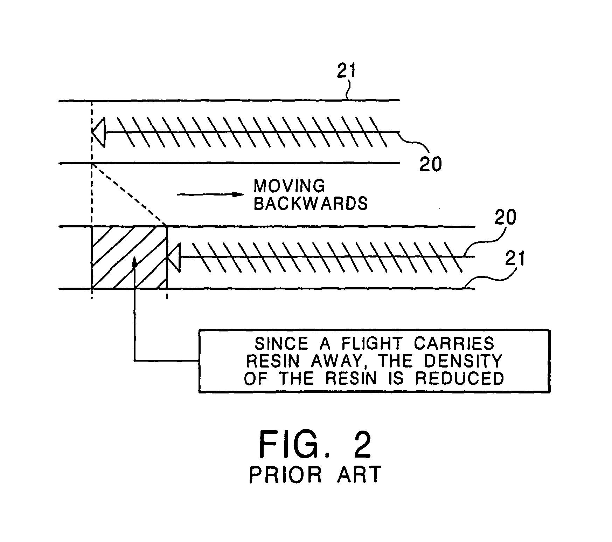

As is schematically shown in Fig. 2, when the screw 20 is driven backwards, since the resin is applied to the flight, the resin is also likely to be dragged backwards together with the flight. Accordingly, a uniform distribution of the volume and density of the resin is hampered at the nose portion of the screw 20. This leads to a nonuniform weight of the molded products.

EP 1 072 387 A forms part of the prior art under Art. 54 (3) EPC and discloses a method and apparatus for adjusting a zero point of a pressure sensor of an injection apparatus, which method and apparatus enable precise zero-point adjustment for the pressure sensor. Pressure of resin is detected by use of the pressure sensor, while a screw is moved, and a detection value corresponding to a detected pressure is obtained. The zero point of the pressure sensor is adjusted on the basis of the detection value. The detection value is obtained when the screw is moved in a state in which a flight speed is rendered lower than a screw speed. In this case, since the frictional resistance which acts on resin in the vicinity of the inner circumferential surface of the heating cylinder upon movement of the screw can be decreased, loads stemming from the frictional resistance are prevented from serving as disturbance against the detection value. As a result, zero-point adjustment for the pressure sensor can be performed precisely.

JP 2000 015675 discloses a method for injection molding thin plate-like moldings by accelerating a rotational speed of a screw in the case of metering at an acceleration of a predetermined value or less for not generating resin feeding without unloading at the time of starting the metering to a predetermined rotational speed. In a metering step, a screw is rotated backward while melting raw material resin introduced from a hopper, the resin is fed to a front end in a cylinder in a direction of a mold, and metered. Here, a program setter for altering setting of a rotational speed controller for controlling a rotational speed of the screw as a program is provided. The program executes a predetermined acceleration control according to an acceleration of feeding the resin without unloading as previously obtained by a test and thereafter controls the acceleration to obtain a predetermined rotational speed. At the time of arriving at a position near an end of metering the screw, the screw is decelerated, and controlled to rotate at a predetermined rotational speed up to the end of metering. Thus, a rapid stable production with little deterioration of the resin can be performed.

JP-A-61-121 921 discloses a method, whereby the rotational speed of a retreating screw 4B is controlled to obtain a constant screw retracting speed.

SUMMARY OF THE INVENTION

Accordingly, it is an object of the present invention to provide a method for controlling an injection molding machine in which the influence on a resin during a backward movement of a screw, and more particularly, the influence, on the distribution of the density of the resin can be cancelled.

The present invention can be applied to an injection molding machine comprising a heating cylinder and a screw disposed in the heating cylinder, and performing a plasticization/measuring process and an injecting process. According to the present invention, a method for controlling the injection molding machine is provided as set forth in claim 1.

A preferred embodiment of the present invention may be gathered from the dependent claim.

BRIEF DESCRIPTION OF THE DRAWINGS

Figs. 1A and 1B are explanatory views showing a typical example of a screw in an injection molding machine;
Fig. 2 is a schematic diagram explaining the relationship between the screw and resin in a heating cylinder;
Fig. 3 is a view showing a structure of a motor-driven injection molding machine according to the present invention, focusing on an injection unit; and
Figs. 4A and 4B are schematic diagrams showing the relationship between the screw and the resin in a heating cylinder to explain a preferred embodiment of the present invention.

**DESCRIPTION OF THE PREFERRED EMBODIMENTS**

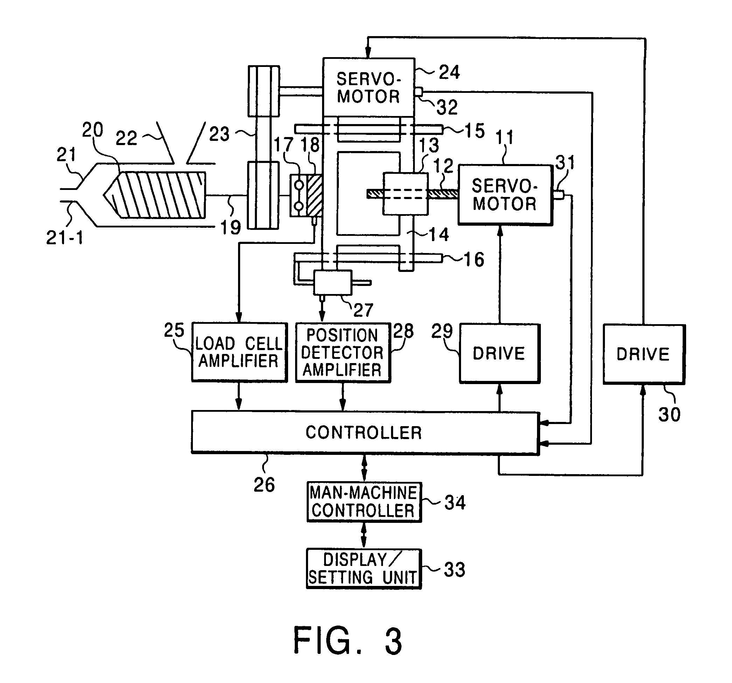

Referring to Fig. 3, a motor-driven injection molding machine will be described focusing on an injection unit.

The motor-driven injection molding machine is provided with the injection unit driven by a servomotor. In such an injection unit, rotation of the servomotor is converted into linear motion by a ball screw and a nut, thereby moving a screw forward and backward.

In Fig. 3, the rotation of an injection servomotor 11 is transmitted to a ball screw 12. A nut 13 is fixed on a pressure plate 14 and is moved forward and backward by rotation of the ball screw 12. The pressure plate 14 is movable along four guide bars 15 and 16 (only two are shown in the figure) fixed on a base frame (not shown). Forward and backward movement of the pressure plate 14 is transmitted to a screw 20 via a bearing 17, a load cell 18, and an injection shaft 19. The screw 20 is disposed in a heating cylinder 21 such that rotary and axial movement can be achieved. The heating cylinder 21 includes a hopper 22 for feeding a resin to a position corresponding to a rear portion of the screw 20. Rotary motion of a servomotor 24 for rotating the screw 20 is transmitted to the injection shaft 19 via a connecting member 23 which may be a belt, pulleys, etc. In other words, the servomotor 24 rotates the injection shaft 19 which in turn rotates the screw 20.

In a plasticization/measuring process, the screw 20 rotates and moves backwards in the heating cylinder 21, so that a molten resin is moved in a feed forward direction and that the molten resin is stored in front of the screw 20, that is, at a nozzle 21-1 side in the heating cylinder 21. The backward movement of the screw 20 is caused by pressure due to a gradual increase in the amount of molten resin stored in front of the screw 20.

In an injecting process, the forward movement of the screw 20 in the heating cylinder 21 is caused by driving force from the injection servomotor 11, so that the molten resin stored in front of the screw 20 is forced into and is pressurized in a metal mold. In this case, the force required for pressing the molten resin is detected by the load cell 18 as an injection pressure. The detected injection pressure is amplified by a load cell amplifier 25 and is fed into a controller 26. The pressure plate 14 has a position detector 27 to detect the amount of movement of the screw 20. The detecting signal outputted from the position detector 27 is amplified by a position detector amplifier 28 and is fed into the controller 26.

The controller 26 outputs current (torque) instruction values corresponding to the respective processes and based on values preset by a display/setting unit 33 via a man-machine controller 34. The current instruction values are fed to a drive 29 and a drive 30. The drive 29 controls a current for driving the servomotor 11 to control an output torque of the servomotor 11. The drive 30 controls a current for driving the servomotor 24 to control the number of revolutions of the servomotor 24. The servomotor 11 and the servomotor 24 comprise encoders 31 and 32, respectively, to detect the number of revolutions. The number of revolutions detected by the encoders 31 and 32 is fed to the controller 26. In particular, the number of revolutions detected by the encoder 32 is used to determine the number of revolutions of the screw 20.

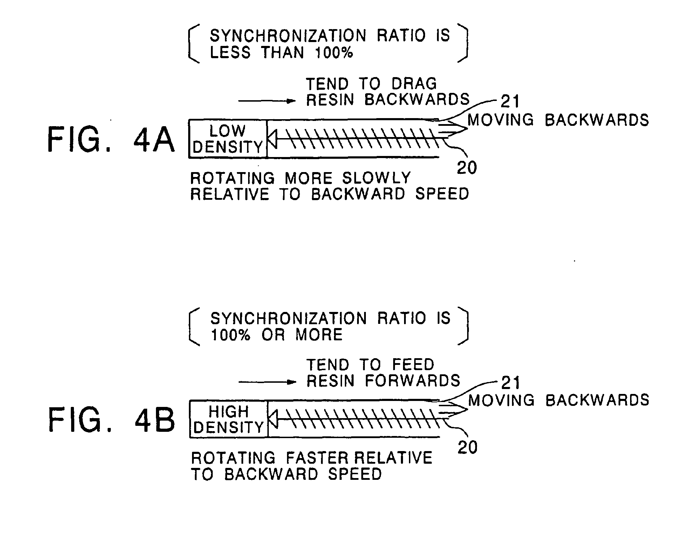

Referring to Figs. 4A and 4B, a control method according to a preferred embodiment of the present invention will be described. The control method according to the present invention is applied to the injection molding machine shown in Fig. 3. The controller 26 receives the detecting signals from the position detector 27 and the encoders 31 and 32, controls the servomotors 11 and 24, and also controls the plasticization/measuring process and injecting process. Also, the controller 26 carries out the control method according to the present invention, which will be described hereinbelow.

In this embodiment, the screw 20 is rotated and moved backwards after completion of the measuring process or the injecting process. In other words, the screw 20 is moved linearly backwards relative to the feed forward direction of the molten resin. Particularly, a synchronization ratio S of the rotation speed at which a flight 20a of the screw 20 does not apparently move relative to a backward speed V of the screw 20 is defined as 100 %. The synchronization ratio S can be set from 0 % to an arbitrary percentage, and each of settings of more than 100% and setting to less than 100 % has the following purpose:

The synchronization ratio S is less than 100 %: This setting is performed for the purpose of dragging the resin backwards with the flight of the screw 20, as shown in Fig. 4A.

The synchronization ratio S is more than 100 %: this setting is performed for the purpose of feeding the resin forward, that is, for measuring the resin, as shown in Fig. 4B. However, the measuring is performed at a constant rotation speed irrespective of the pressure of the resin when the screw moves backwards at a constant speed, and is different from a conventional control for maintaining the pressure of the resin constant. This operation prevents generation of a low density region during backward movement of the screw 20.

When the spacing (pitch P in Fig. 1 A) between the flights of the screw 20 is 20 mm, for example, the flight moves by 20 mm on each rotation of the screw. In this instance, if the screw 20 moves backwards at a speed of 20 mm/sec, the flight of the screw 20 is apparently at a fixed position when the screw 20 rotates one turn per one second. However, the direction of the rotation depends on the direction of the rotation of the flight in the screw 20. if the flight in the screw 20 is the clockwise direction, the direction of the rotation is the clockwise direction.

This is expressed by the following equation:

$$\text{Rotation speed R (rpm)}$$

$$= [\text{Backward speed V (mm/sec)}]/\text{Pitch P (mm) of the flight}] \times 60$$

Where, when the synchronization ratio S is multiplied by the rotation speed R which is obtained by the equation, a consistent state of the resin can be controlled during the backward movement of the screw 20. Namely, a selected rotation speed Rs is given by the following equation by the use of a selected synchronization .ratio Sx.

$$Rs = (V/P) \times Sx.$$

According to the present invention, as defined in the appended claims, when the screw is moved backward, the screw is rotated at an arbitrary rotation speed, and thus, the density distribution of the resin in the heating cylinder, particularly at the nose portion of the screw, can be sufficiently controlled so that variations in the weight of the molded products can be reduced.

**Claims**

1.   A method for controlling an injection molding machine including a heating cylinder (21) and a screw (20) disposed in the heating cylinder, and performing a plasticization/measuring process and an injecting process, the screw being rotatable and being linearly movable and having a flight (20a) of a pitch P, wherein molten resin is moved in a forward feeding direction during the plasticization process and the injecting process;

   the method comprising the steps of:

   defining a synchronization ratio S of a rotation speed of the screw to be 100 % when the position of a flight of the screw does not apparently move relative to a backward speed V of the screw; and
   linearly moving the screw with an injection servo motor backwards relative to the forward feeding direction of the molten resin at a constant backward speed V and simultaneously rotating the screw with a servo motor for rotating the screw in the forward feeding direction at a rotation speed R which is determined based on the backward speed V and the pitch P so as to control density of the molten resin at a nose portion of the screw by setting the synchronization Ratio to be less or more than 100% after completion of the plasticization process or the injecting process,
   wherein, when the synchronization ratio S is less than 100%, the screw is rotated more slowly relative to the backward speed V of the screw, so that a resin in the heating cylinder tends to be dragged backwards with the flight of the screw; and
   wherein, when the synchronization ratio S is more than 100%, the screw is rotated faster relative to the backward speed V of the screw, so that the resin in the heating cylinder tends to be fed forward of the screw.

2.   A method for controlling an injection molding machine according to claim 1, wherein a selected rotation speed Rs of the screw (20) is given by:

$$Rs = (V/P) \times S.$$

**Patentansprüche**

1.   Verfahren zum Steuern einer Spritzgussmaschine, welche einen Heizzylinder (21) und eine in dem Heizzylinder angeordnete Schnecke (20) umfasst, und zum Durchführen eines Plastisierungs-/Mess-Prozesses und eines Einspritzprozesses, wobei die Schnecke drehbar und linear beweglich ist und einen Schrauben- oder Schneckengang (20a) mit einer Steigung P besitzt, wobei geschmolzenes Harz in einer Vorwärts-Zuführ-Richtung bewegt wird, und zwar während des Plastisierungsprozesses und des Einspritzprozesses;

wobei das Verfahren die folgenden Schritte aufweist:

Definieren eines Synchronisationsverhältnisses S einer Drehgeschwindigkeit der Schnecke als 100%, wenn die Position eines Schneckengangs sich anscheinend nicht bewegt bezüglich einer Rückwärts-Geschwindigkeit V der Schnecke; und
lineares Bewegen der Schnecke mit einem Einspritzservomotor rückwärts relativ zu der Vorwärts-Zuführ-Richtung des geschmolzenen Harzes mit einer konstanten Rückwärts-Geschwindigkeit V und gleichzeitiges Drehen der Schnecke mit einem Servomotor zum Drehen der Schnecke in der Vorwärts-Zuführ-Richtung mit einer Drehgeschwindigkeit R, welche bestimmt wird basierend auf der Rückwärts-Geschwindigkeit V und der Steigung P, um die Dichte des geschmolzenen Harzes an einem vorderen oder Nasenteil der Schnecke zu steuern, durch Einstellen des Synchronisationsverhältnisses auf mehr oder weniger als 100%, und zwar nach der Beendigung des Plastisierungsprozesses oder des Einspritzprozesses,

wobei, wenn das Synchronisationsverhältnis S weniger als 100% ist, die Schnecke langsamer gedreht wird relativ zu der Rückwärts-Geschwindigkeit V der Schnecke, so dass ein Harz in dem Heizzylinder dazu neigt, mit dem Schneckengang rückwärts gezogen zu werden; und
wobei, wenn das Synchronisationsverhältnis mehr als 100% ist, die Schnecke schneller gedreht wird relativ zu der Rückwärts-Geschwindigkeit V der Schnecke, so dass das Herz in dem Heizzylinder dazu neigt, bezüglich der Schnecke nach vorne transportiert zu werden.

2. Verfahren zum Steuern einer Spritzgussmaschine gemäß Anspruch 1, wobei eine ausgewählte Drehgeschwindigkeit Rs der Schnecke (20) gegeben ist durch:

$$Rs = (V/P) \times S.$$

## Revendications

1. Procédé de commande d'une machine de moulage par injection comprenant un cylindre de chauffage (21) et une vis (20) disposée dans le cylindre de chauffage et réalisant un processus de plastification/mesure et un processus d'injection, la vis étant susceptible de tourner et étant déplaçable de façon rectiligne et ayant un filet (20a) d'un pas P, dans lequel de la résine P est déplacée dans une direction d'alimentation directe pendant le processus de plastification et le processus d'injection ;
le procédé comprenant les étapes suivantes :

définir un taux de synchronisation S de la vitesse de rotation de la vis comme étant de 100 % quand la position d'un filet de la vis ne se déplace apparemment pas par rapport à la vitesse vers l'arrière V de la vis ; et
déplacer linéairement la vis par un servo-moteur d'injection vers l'arrière, par rapport à la direction d'alimentation vers l'avant de la résine moulée, à une vitesse arrière constante V et faire tourner simultanément la vis au moyen d'un servo-moteur pour faire tourner la vis dans la direction d'alimentation vers l'avant à une vitesse de rotation R qui est déterminée sur la base de la vitesse vers l'arrière V et du pas P de façon à commander la densité de la résine moulée au niveau d'une partie de nez de la vis en réglant le taux de synchronisation pour qu'il soit inférieur à 100 %, après achèvement du processus de plastification ou du processus d'injection,

dans lequel, quand le taux de synchronisation S est inférieur à 100 %, la vis est entraînée en rotation plus lentement par rapport à la vitesse vers l'arrière V de la vis de sorte que de la résine dans le cylindre de chauffage tend à être entraînée vers l'arrière avec le filet de la vis ; et dans lequel, quand le taux de synchronisation S est supérieur à 100 %, la vis est entraînée en rotation plus vite par rapport à la vitesse vers l'arrière V de la vis, de sorte que la résine dans le cylindre de chauffage tend à être fournie vers l'avant de la vis.

2. Procédé de commande d'une machine de moulage par injection selon la revendication 1, dans lequel la vitesse de rotation sélectionnée Rs de la vis (20) est donnée par :

$$Rs = (V/P) \ x \ S.$$

**FIG. 1A** PRIOR ART

**FIG. 1B** PRIOR ART

20-5

20-4 HEAD SECTION

20-3 MEASURING SECTION

PITCH P

20a

20-2 COMPRESSING SECTION

20

20-1 FEED SECTION

OUTSIDE DIAMETER D

20-5

EFFECTIVE LENGTH OF SCREW

BOTTOM SHAPE OF SCREW GROOVE

EP 1 207 032 B1

MOVING BACKWARDS

SINCE A FLIGHT CARRIES
RESIN AWAY, THE DENSITY
OF THE RESIN IS REDUCED

# FIG. 2
## PRIOR ART

FIG. 3

( SYNCHRONIZATION RATIO IS )
( LESS THAN 100% )

TEND TO DRAG
RESIN BACKWARDS ⌐21

MOVING BACKWARDS

FIG. 4A LOW DENSITY

ROTATING MORE SLOWLY
RELATIVE TO BACKWARD SPEED

20

( SYNCHRONIZATION RATIO IS )
( 100% OR MORE )

TEND TO FEED
RESIN FORWARDS ⌐21

MOVING BACKWARDS

FIG. 4B HIGH DENSITY

ROTATING FASTER RELATIVE
TO BACKWARD SPEED

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1072387 A
- JP 2000015675 A
- JP 61121921 A